# FASCICULE DE BREVET EUROPEEN

(11) **EP 0 474 524 B1**
(45) Date de publication et mention de la délivrance du brevet: **13.09.1995**
(21) Numéro de dépôt: 91402099.5
(22) Date de dépôt: 26.07.1991
(51) Int. Cl.: B01F 3/02, B01F 5/04

(54) **Procédé et dispositif de mélange de deux gaz**
Verfahren und Vorrichtung zum Mischen zweier Gase
Process and device for mixing two gases

(30) Priorité: 27.07.1990 FR 9009617
(43) Date de publication de la demande: 11.03.1992
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Arpentinier, Philippe, F-75008 Paris (FR)
(74) Mandataire: Le Moenner, Gabriel

(56) Documents cités:
- EP-A- 0 377 088
- DE-A- 2 729 449
- US-A- 4 869 595
- PATENT ABSTRACTS OF JAPAN, vol. 8, no. 126 (C-228)(1563), 13 juin 1984; & JP-A-5939331 (MITSUBISHI JUKOGYO K.K.) 03.03.1984

## Description

La présente invention concerne les procédés et dispositifs de mélange de deux gaz par injection, dans un flux d'un premier gaz s'écoulant dans une portion de canalisation, d'un second gaz.

Un procédé et un dispositif de mélanges de fluides de ce type sont décrits dans le document Patent Abstracts of Japan, vol. 8, N° 126, juin 1984 (JP-A-5 939 331).

La présente invention a pour objet de proposer un procédé et un dispositif permettant d'obtenir, de façon fiable, avec une sécurité accrue, un mélange homogène des deux gaz sur une très courte distance en aval de la zone d'injection, en évitant des surconcentrations locales, dans cette courte zone de mélange, du second gaz injecté.

Pour ce faire, l'invention propose un procédé de mélange de deux gaz par injection, dans un flux d'un premier gaz s'écoulant suivant une première direction dans une portion de canalisation ayant un axe, d'au moins deux flux d'un second gaz injectés sensiblement radialement vers l'extérieur via des sections de sortie dans le flux du premier gaz, caractérisé en ce que le second gaz est injecté de manière telle que chaque flux radial du second gaz est incliné par rapport au plan tangent de la section de sortie correspondante et qu'un mouvement de rotation du second gaz injecté autour de l'axe soit créé.

Le dispositif selon l'invention, du type comportant une portion de canalisation ayant un axe dans laquelle s'écoule un premier gaz, et un conduit comportant une extrémité d'éjection s'étendant dans la portion de canalisation co-axialement à l'axe et éjectant le second gaz suivant aux moins deux flux dirigés sensiblement radialement vers l'extérieur, est caractérisé en ce que l'extrémité d'éjection définit intérieurement au moins deux passages s'étendant entre une section d'entrée centrale et des sections de sortie périphériques et délimités par des aubages dont au moins la partie radialement extérieure est inclinée par rapport au plan tangent de la section de sortie correspondante, de manière à créer un mouvement de rotation du second gaz injecté autour de l'axe.

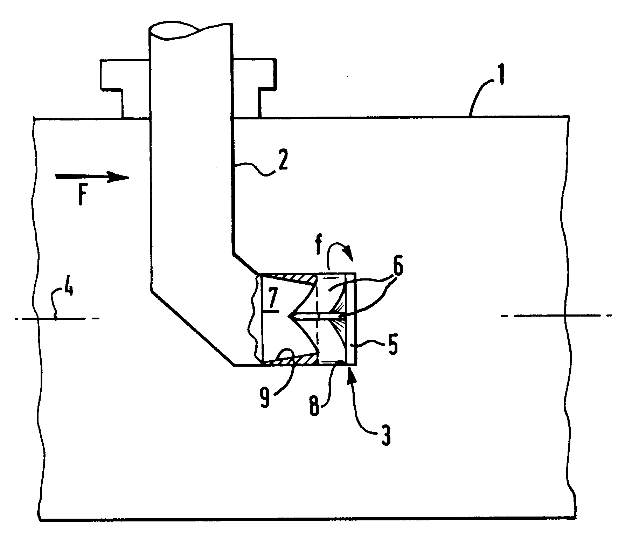

D'autres caractéristiques et avantages de la présente invention ressortiront de la description suivante d'un mode de réalisation, donné à titre illustratif mais nullement limitatif, faite en relation avec le dessin annexé, sur lequel :
- la planche unique est une vue schématique en coupe longitudinale, partiellement en arraché, d'un dispositif pour la mise en oeuvre du procédé selon l'invention.

On a représenté sur la figure unique un dispositif de mélange selon l'invention convenant plus particulièrement pour la suroxygénation d'un débit d'air en vue d'un procédé d'oxydation en phase gazeuse dans le domaine de la pétrochimie. On reconnait sur cette figure, un tronçon de canalisation linéaire de grand diamètre 1 dans lequel circule un flux F d'un premier gaz, en l'occurrence de l'air. Dans cette canalisation 1 pénètre radialement un conduit 2 pour un second gaz à injecter, en l'occurrence de l'oxygène, ce conduit 2, en acier inoxydable étant coudé et se terminant par une partie d'extrémité 3 co-axiale à l'axe 4 de la portion de canalisation 1. La partie d'extrémité 3 a son extrémité aval occultée par un voile transversal 5, des aubes angulairement réparties 6, à la façon des aubes d'un compresseur centrifuge, définissant des passages entre une section d'entrée amont 7 et des sections de sortie périphériques angulairement réparties 8. De façon plus spécifique, pour accélérer le second gaz dans la tête d'injection 3, la section d'entrée 7 comporte un convergent 9 se raccordant aux aubes 6.

Le nombre d'aubes 6 est variable, selon les gaz à mélanger et leurs débits. Dans le cas de sur-oxygénation d'air, ce nombre est supérieur à 6 et avantageusement compris entre 8 et 16, avec des aubes intermédiaires raccourcies. Selon un aspect de l'invention, les aubes 6 ont une partie de pied sensiblement radiale puis s'incurvent tangentiellement vers l'extérieur, en formant en sortie, un angle avantageusement compris entre 30 et 45°, par rapport au plan tangent correspondant pour délivrer un flux de sortie f du second gaz présentant une composante tangentielle à la sortie de la tête d'injection 3 de façon à créer un mouvement de rotation du second gaz injecté autour de l'axe de la portion de canalisation principale 1, mouvement qui, combiné avec l'écoulement axial du flux principal F, provoque la formation, en aval de la tête d'éjection, d'un noyau toroidal s'élargissant rapidement dans lequel les deux gaz se trouvent rapidement intimement mélangés dans les proportions requises.

Dans le mode de réalisation représenté, la canalisation d'air 1 a un diamètre d'environ 1 mètre, pour un flux d'air F ayant un débit de l'ordre de 500 à 400 tonnes/heure, le diamètre de la tête d'injection 3 étant de l'ordre de 5 à 20 cm, pour un débit d'oxygène à injecter de l'ordre de 4 à 20 tonnes/heure, selon que l'on recherche une faible sur-oxygénation ou une plus forte sur-oxygénation. Typiquement, la vitesse d'éjection du second gaz (flux f) est supérieure à la vitesse du flux principal F, dans l'exemple décrit 30 mètres/seconde pour le flux d'injection f et 20 mètres/seconde pour le flux principal F.

Comme sus-mentionné, le procédé et le dispositif selon l'invention sont particulièrement efficaces pour le mélange de deux gaz de masses moléculaires peu différentes, notamment pour la sur-oxygénation d'air trouvent de nombreuses applications en pétrochimie, par exemple pour la fabrication de dichloroéthane par oxychloration d'éthylène, la fabrication d'oxyde d'éthylène et d'éthylèneglycol par époxydation de l'éthylène, la fabrication d'acrylonitrile par ammoxydation du propylène, ou la fabrication d'anhydride maléique par oxydation du N-butane ; en raffinage, par exemple pour le dopage de régénérateurs de craquage catalytique, ou l'enrichissement de l'air dans les procédés CLAUS ; en chimie, par exemple pour la fabrication d'eau oxygénée par le procédé à l'éthylhydroanthraquinone, l'oxydation de SO₂ en SO₃, la fabrication d'acide nitrique par oxydation de l'ammoniac, ou plus généralement tous les grands procédés d'oxydation destinés à produire des oxydes métalliques, ces différents produits utilisant une sur-oxygénation entre 2 et 12 % d'un courant d'air principal.

Le procédé et le dispositif selon l'invention trouvent également des applications, en chimie ou en pétrochimie, pour la réalisation de pré-mélanges gazeux réactionnels. Enfin, le procédé et le dispositif selon l'invention peuvent être appliqués à l'homogénéisation de mélanges de poudres fines, les deux gaz à mélanger, éventuellement identiques, étant chargés en particules de poudres différentes, mélangées dans les mélanges de gaz, puis recueillies dans un séparateur à faibles pertes de charges.

## Revendications

1. Procédé de mélange de deux gaz par injection, dans un flux d'un premier gaz (F) s'écoulant suivant une première direction dans une portion de canalisation ayant un axe (4), d'au moins deux flux (f) d'un second gaz injectés sensiblement radialement vers l'extérieur via des sections de sortie dans le flux du premier gaz, caractérisé en ce que le second gaz est injecté de manière telle que chaque flux radial (f) du second gaz est incliné par rapport au plan tangent de la section de sortie correspondante et qu'un mouvement de rotation du second gaz injecté autour de l'axe (4) est créé.

2. Procédé selon la revendication 1, caractérisé en ce que le second gaz a un débit massique inférieur au premier gaz.

3. Procédé selon la revendication 1 ou 2, caractérisé en ce que le premier et le second gaz ont des masses moléculaires voisines.

4. Procédé selon l'une des revendications précédentes, caractérisé en ce que le premier gaz est de l'air et le second gaz de l'oxygène.

5. Procédé selon l'une des revendications 1 à 4, caractérisé en ce que le premier et le second gaz sont des gaz vecteurs chargés de particules de poudres à mélanger.

6. Procédé selon l'une des revendications précédentes, caractérisé en ce que la vitesse d'éjection du flux (f) du second gaz est supérieure à la vitesse d'écoulement du premier flux (F).

7. Dispositif de mélange de deux gaz comportant une portion de canalisation (1) ayant un axe (4), dans laquelle s'écoule un premier gaz, et un conduit (2) comportant une extrémité d'éjection (3) s'étendant dans la portion de canalisation (1) coaxialement à l'axe (4) et éjectant le second gaz suivant aux moins deux flux (f) dirigés sensiblement radialement vers l'extérieur, caractérisé en ce que l'extrémité d'éjection (3) définit intérieurement au moins deux passages s'étendant entre une section d'entrée centrale (7) et des sections de sortie périphériques (8) et délimités par des aubages (6) dont au moins la partie radialement extérieure est inclinée par rapport au plan tangent de la section de sortie correspondante (8) de manière à créer un mouvement de rotation du second gaz injecté autour de l'axe (4).

8. Dispositif selon la revendication 7, caractérisé en ce que la section d'entrée (7) présente un profil (9) convergeant vers les aubages (6).

## Claims

1. Method for mixing two gases by injecting, into a flow of a first gas (F) flowing in a first direction in a portion of pipe having an axis (4), at least two flows (f) of a second gas injected substantially radially outwards via output sections into the flow of the first gas, characterised in that the second gas is injected in such a way that each radial flow (f) of the second gas is at an angle with respect to the tangent plane of the corresponding output section and a rotation movement of the second injected gas about the axis (4) is created.

2. Method according to Claim 1, characterised in that the second gas has a lower mass flow than the first gas.

3. Method according to Claim 1 or 2, characterised in that the first and second gases have similar molecular masses.

4. Method according to one of the preceding claims, characterised in that the first gas is air and the second gas is oxygen.

5. Method according to one of Claims 1 to 4, characterised in that the first and second gases are carrier gases loaded with particles of powders to be mixed.

6. Method according to one of the preceding Claims, characterised in that the ejection speed of the flow (f) of the second gas is greater than the flow speed of the first flow (F).

7. Device for mixing two gases including a portion of pipe (1) having an axis (4), into which a first gas flows, and a conduit (2) having an ejection end (3) extending into the portion of pipe (1) coaxially with the axis (4) and ejecting the second gas in at least two flows (f) directed substantially radially outwards, characterised in that the ejection end (3) defines on the inside at least two passages extending between a central input section (7) and peripheral output sections (8) and delimited by turbine blades (6), at least the radially outermost part of which is at an angle with respect to the tangent plane of the corresponding output section (8) so as to create a rotation movement of the second injected gas about the axis (4).

8. Device according to Claim 7, characterised in that the input section (7) has a profile (9) converging towards the turbine blades (6).

## Patentansprüche

1. Verfahren zum Mischen zweier Gase, indem man in einen Strom eines ersten Gases (F), das in einer ersten Richtung in einem ersten Kanalabschnitt mit einer Achse (4) strömt, mindestens zwei Ströme (f) eines zweiten Gases einleitet, die im wesentlichen radial nach außen über Austrittsabschnitte in den Strom des ersten Gases eingeleitet werden, dadurch gekennzeichnet, daß das zweite Gas derart eingeleitet wird, daß jeder radiale Strom (f) des zweiten Gases in bezug auf die Tangentialebene des entsprechenden Austrittsabschnitts geneigt ist und daß eine Rotationsbewegung des eingeleiteten zweiten Gases um die Achse (4) erzeugt wird.

2. Verfahren nach Anspruch 1, dadurch gekennzeichnet, daß das zweite Gas einen kleineren Massendurchfluß als das erste Gas hat.

3. Verfahren nach Anspruch 1 oder 2, dadurch gekennzeichnet, daß das erste und das zweite Gas nahe beieinanderliegende Molekularmassen haben.

4. Verfahren nach einem der vorhergehenden Ansprüche, dadurch gekennzeichnet, daß das erste Gas Luft und das zweite Gas Sauerstoff ist.

5. Verfahren nach einem der Ansprüche 1 bis 4, dadurch gekennzeichnet, daß das erste und das zweite Gas Fördergase sind, die mit zu vermischenden Pulverteilchen beladen sind.

6. Verfahren nach einem der vorhergehenden Ansprüche, dadurch gekennzeichnet, daß die Ausstoßgeschwindigkeit des Stroms (f) des zweiten Gases größer als die Strömungsgeschwindigkeit des ersten Stroms (F) ist.

7. Vorrichtung zum Mischen zweier Gase, mit einem Kanalabschnitt (1) mit einer Achse (4), in welchem ein erstes Gas strömt, und einer Leitung (2) mit einem Ausstoßende (3), das sich in dem Kanalabschnitt (1) koaxial zu der Achse (4) erstreckt und das zweite Gas in zumindest zwei im wesentlichen radial nach außen gerichteten Strömen (f) ausstößt, dadurch gekennzeichnet, daß das Ausstoßende (3) im Innern mindestens zwei Durchlässe festlegt, die sich zwischen einem mittigen Eintrittsabschnitt (7) und peripheren Austrittsabschnitten (8) erstrecken und von Umlenkblechen (6) begrenzt sind, bei denen zumindest der radial außen liegende Teil in bezug auf eine Tangentialebene des entsprechenden Austrittsabschnitts (8) derart geneigt ist, daß eine Rotationsbewegung des um die Achse (4) eingeleiteten zweiten Gases erzeugt wird.

8. Vorrichtung nach Anspruch 7, dadurch gekennzeichnet, daß der Eintrittsabschnitt (7) ein Profil (9) hat, das zu den Umlenkblechen (6) hin konvergiert.
